# EUROPEAN PATENT APPLICATION

(11) **EP 1 970 251 A1**
(43) Date of publication of application: **17.09.2008**
(21) Application number: 08151986.0
(22) Date of filing: 27.02.2008
(51) Int. Cl.: B60R 3/02

(54) **Step apparatus for vehicle**

(30) Priority: 15.03.2007 JP 2007066305
(71) Applicant: AISIN SEIKI KABUSHIKI KAISHA, Kariya-shi, Aichi-ken 448-8650 (JP)
(72) Inventor: Okada, Hiroki, Kariya-shi, Aichi 448-8650 (JP); Fukumoto, Ryoichi, Kariya-shi, Aichi 448-8650 (JP); Suzuki, Seiichi, Nishikamo-gun, Aichi (JP)
(74) Representative: TBK-Patent

(57) **Abstract**

A step apparatus for a vehicle includes an electric driving source (21), a first transmitting device (29), a second transmitting device (40, 75, 80) and a releasing device (50, 60, 70). The first transmitting device (29) transmits driving force from the electric driving source to a door (2) so as to open and close the door (2). The second transmitting device (40, 75, 80) transmits the driving force from the electric driving source (21) to a step member (4) via the first transmitting device (29) so as to move the step member (4). The releasing device (50, 60, 70) releases a connection between the step member (4) and the second transmitting device (40, 75, 80).

## Description

### FIELD OF THE INVENTION

The present invention generally relates to a step apparatus for a vehicle.

### BACKGROUND

Generally with respect to a vehicle such as a van or mini-van, a height of a vehicle floor is designed to be comparatively high. Accordingly, a step is provided at a platform of the vehicle floor in a manner where a height of the step is lower than the height of the vehicle floor so that one step can be close to a ground. However, in a structure where the step is simply provided at the platform of the vehicle, a useable space of the vehicle floor is arranged to be smaller by a space of the step. Therefore, there has been a possibility described hereinafter. That is, though a seat(s) is mounted on the vehicle floor at a side of the step and a rear side thereof, a recessed space is formed at the foot of a passenger seated on the seat by providing the step. Accordingly, the passenger may be forced to be seated on the seat in an unnatural manner, and/or luggage loaded in a compartment of the vehicle may fall to the recessed area.

In view of the above described circumstances, for example, a step apparatus for a vehicle is disclosed in JP04(1992)-003870Y (hereinafter, referred to as a reference 1). According to the step apparatus for the vehicle in the reference 1, an end of a vehicle floor is enlarged so that a recessed area formed on the foot of a passenger seated on a seat is arranged to be small, hence reducing an area of a step. In order to compensate an area of the step, which is reduced, a structure for protruding and accommodating a step is employed. In other words, according to the step apparatus for the vehicle in the reference 1, a motor is provided in the vicinity of a door of the vehicle, and the step is protruded and accommodated by rotating the motor in a normal direction and in a reversed direction on the basis of signal detected in accordance with open and close conditions of the vehicle door.

Further, JP06(1994)-041883Y (hereinafter, referred to as a reference 2) discloses a step apparatus for a vehicle, in which a motor (a drive engine) is provided at an inner side-surface of a starting portion of the step. The step is protruded and stored by being driven by the motor. In addition, the reference 2 has proposed that, in a case where the motor may fail, a floor surface of the vehicle is opened and an emergency handle is operated so that a connection between the motor and a driving shaft of the motor is released. Thus, the step can be stored by a manual operation.

The step apparatus for the vehicle disclosed in each of the references 1 and 2 requires a motor for protruding and accommodating the step, a switch for detecting that the step is protruded to a predetermined position, a control circuit for controlling the motor on the basis of a signal of the switch, and so on, thus leading to increase a cost of a system. In response to the foregoing drawback, JP2007-22142 (hereinafter, referred to as a reference 3) discloses a mechanism in which power of an electric power source is transmitted to a step of a vehicle via a mechanism relating to opening and closing operations of a door of the vehicle.

However, when a failure, where the step is immovable (i.e., hardly moves or is not allowed to move) because of being fixed or for example being frozen due to congelation (freezing temperatures), has occurred to such mechanism relating to moving the step of the vehicle, the step in a protruded state unlikely to be retracted to be accommodated and may interfere with the vehicle door. In such a condition, the door of the vehicle may not be operated to be fully-closed from a fully-opened state.

A need thus exists for a step apparatus for a vehicle, in which a step in a protruded state is accommodated (housed) by a manual operation and a door of the vehicle is operated to be closed without being interfered by the step, even when a failure, in which the step hardly moves or is not allowed to move, occurs.

### SUMMARY OF THE INVENTION

According to an aspect of the present invention, a step apparatus for a vehicle includes an electric driving source, a first transmitting device, a second transmitting device and a releasing device. The first transmitting device transmits driving force from the electric driving source to a door so as to open and close the door. The second transmitting device transmits the driving force from the electric driving source to a step member via the first transmitting device so as to move the step member. The releasing device releases a connection between the step member and the second transmitting device.

Due to the above described structure, even when an immovable failure, where the second transmitting device hardly moves or is not allowed to move because of being fixed, has occurred, a connection between the releasing device and the step member is released and therefore, the step member in a protruded state can be accommodated with a manual operation and the door can be operated to be closed without being interrupted with the step member.

Further according to an aspect of the present invention, the second transmitting device includes a driving-side operating member adapted to be connected to a vehicle body and having a driving-side engagement portion. In addition, the releasing device includes a driven-side operating member, a first engagement member, a second engagement member, and a biasing member. The driven-side operating member is pivotably connected to the step member and has a driven-side engagement member which is engageable with and disengageable from the driving-side engagement portion of the driving-side operating member. The first engagement member is provided at the driven-side operating member to be movable relative to the driven-side operating member. The second engagement member is fixed to the step member and is engageable with and disengageable from the first engagement member when the driven-side operating member is positioned at a predetermined relative engaging position between the driving-side engagement portion of the driving-side operating member and the driven-side engagement portion of the driven-side operating member. The biasing member biases the first engagement member so that the first engagement member and the second engagement member are engaged with each other when the driven-side operating member is positioned at the predetermined relative engaging position. When operational force is applied to the first engagement member, an engagement between the first engagement member and the second engagement member is released by moving the first engagement member against the biasing member and an engagement between the driving-side engagement portion of the driving-side operating member and the driven-side engagement portion of the driven-side operating member is released by pivotally rotating the driven-side operating member together with the first engagement member. Accordingly, the connection between the step member with the second transmitting device is released.

Due to the above described structure, in a case where the first engagement member is moved against the biasing member when the operational force is applied to the first engagement member, the engagement between the first engagement member and the second engagement member is released. In such a condition, when the driven-side operating member is pivotally rotated together with the first engagement member, the engagement between the driving-side engagement portion of the driving-side operating member and the driven-side engagement portion of the driven-side operating member is released and therefore, the connection between the step member and the second transmitting device is released. Accordingly, even when the immovable failure occurs because the second transmitting device hardly moves or is not allowed to move by being fixed, the step member in the protruded state can be accommodated with the manual operation.

Still further according to an aspect of the present invention, the second transmitting device includes a driving-side operating member adapted to be connected to a vehicle body and having a driving-side engagement portion. On the other hand, the releasing device includes a driven-side operating member, a connecting member, and an opening portion. The driven-side operating member is pivotably connected to the step member and has a driven-side engagement member which is engageable with and disengageable from the driving-side engagement portion of the driving-side operating member. The connecting member is provided for attaching the driven-side operating member to the step member and detaching the driven-side operating member from the step member. In addition, the connecting member unrotatably fixes the driven-side operating member to the step member when the driven-side operating member is positioned at a predetermined relative engaging position between the driving-side engagement portion of the driving-side operating member and the driven-side engagement portion of the driven-side operating member. The opening portion is formed at the step member for inserting a tool for removing the connecting member. An engagement between the driving-side engagement portion of the driving-side operating member and the driven-side engagement portion of the driven-side operating member is released by pivotably rotating the driven-side operating member when operational force is applied relative to the driven-side engagement portion of the driven-side operating member under the connecting member being removed from the driven-side operating member by the tool inserted through the opening portion. Accordingly, the connection between the step member and the second transmitting device is released.

Still further, the step apparatus for the vehicle further includes a closing member. The closing member closes (covers) the opening portion of the releasing device and is removable from the opening portion so as to attach the driven-side operating member to the step member and detach the driven-side operating member from the step member by means of the connecting member.

Due to the above described structure, when the connecting member is removed by means of the tool inserted through the opening portion of the releasing device after removing the closing member from the opening portion, the driven-side operating member is allowed to pivotally rotate relative to the step member. In such a condition, when the operational force is applied to the driven-side engagement portion of the driven-side operating member and the engagement between the driving-side engagement portion of the driving-side operating member and the driven-side engagement portion of the driven-side operating member is released, the connection between the step member and the second transmitting device is released by means of the releasing device. Accordingly, even when the immovable failure occurs because the second transmitting device hardly moves or is not allowed to move by being fixed, the step member in the protruded state can be accommodated with the manual operation.

Still further according to an aspect of the present invention, the second transmitting device includes a driving-side operating member adapted to be connected to a vehicle body and having an engagement portion. The releasing device includes a latch, a first biasing member, a pawl and a second biasing member. The latch is pivotably connected to the step member and has a grooved portion being engageable with and disengageable from the engagement portion of the driving-side operating member. The first biasing member biases the latch so that an engagement between the engagement portion of the driving-side operating member and the grooved portion of the latch is released when the latch is positioned at a predetermined relative engaging position between the engagement portion of the driving-side operating member and the grooved portion of the latch. The pawl is pivotably connected to the step member and is engageable with and disengageable from the latch when the latch is positioned at the predetermined relative engaging position. The second biasing member biases the pawl to be engaged with the latch when the latch is positioned at the predetermined relative engaging position. When operational force is applied relative to the pawl, an engagement between the latch and the pawl is released by pivoting the pawl against the second biasing member and an engagement between the engagement portion of the driving-side operating member and the grooved portion of the latch is released by biasing the latch by means of the first biasing member. Thus, the connection between the second transmitting device with the step member is released.

Due to the above described structure, when the operational force is applied to the pawl and the pawl is pivotally rotated against the second biasing member, the engagement between the latch and the pawl is released. At this time, the engagement between the engagement portion of the driving-side operating member and the grooved portion of the latch is released by biasing the latch by means of the first biasing member. Therefore, the connection between the second transmitting device and the step member is released. Accordingly, even when the immovable failure occurs because the second transmitting device hardly moves or is not allowed to move by being fixed, the step member in the protruded state can be accommodated with the manual operation.

Still further according to an aspect of the present invention, the step apparatus for the vehicle further includes a restraining member restraining the latch biased by the first biasing member to the predetermined relative engaging position between the engagement portion of the driving-side operating member and the grooved portion of the latch, when the engagement between the latch and the pawl is released.

Due to the above described structure, after accommodating the step member having been in the protruded state, only by protruding the step member again for example after performing a desired operation (such as fixing of the step member), the engagement portion is fitted into the grooved portion of the latch, and a normal condition, where a torque can be transmitted to the step member, can be regained.

Thus, due to the above described structure, even when the immovable failure occurs, the step member in the protruded state can be accommodated with the manual operation and the door can be operated to be closed without being interrupted with the step member.

### BRIEF DESCRIPTION OF THE DRAWINGS

The foregoing and additional features and characteristics of the present invention will become more apparent from the following detailed description considered with reference to the accompanying drawings, wherein:

Fig. 1 is a plan view illustrating a step apparatus for a vehicle according to a first embodiment when a slide door is in a fully-closed state;

Fig. 2 is a plan view illustrating the step apparatus for the vehicle according to the first embodiment, in a condition where a protruding operation of the movable step is completed;

Fig. 3 is a plan view illustrating the step apparatus for the vehicle according to the first embodiment when the slide door is in a fully-opened state;

Fig. 4 is a cross sectional view illustrating the step apparatus for the vehicle, taken along a line IV-IV in Fig. 2;

Fig. 5 is a cross sectional view illustrating the step apparatus for the vehicle, taken along a line V-V Fig. 2;

Fig. 6A is an enlarged view illustrating a releasing lever illustrated in Fig. 2;

Fig. 6B is an enlarged cross-sectional view of the releasing lever taken along a line VIB-VIB in Fig. 6A;

Fig. 7A is an explanatory view schematically illustrating an operation of the releasing lever, according to the first embodiment;

Fig. 7B is an explanatory view schematically illustrating the operation of the releasing lever, according to the first embodiment;

Fig. 8A is an explanatory view schematically illustrating an operation of the slide door in a fully-closed state;

Fig. 8B is an explanatory view schematically illustrating the operation of the slide door when an opening operation thereof is started;

Fig. 8C is an explanatory view schematically illustrating the operation of the slide door when the slide door is opened with an opening degree corresponding to a predetermined opening and closing position;

Fig. 8D is an explanatory view schematically illustrating the operation of the slide door in a fully-opened state;

Fig. 9 is a schematic view illustrating the vehicle adapted with embodiments of the present invention;

Fig. 10A is a planar view illustrating a releasing mechanism in a condition where a protrusion of the movable step is completed;

Fig. 10B is a cross sectional view of the releasing mechanism taken along a line XB-XB in Fig. 10A;

Fig. 11A is an explanatory view schematically illustrating an operation of the releasing mechanism, according to the second embodiment;

Fog. 11B is an explanatory view schematically illustrating the operation of the releasing mechanism, according to the second embodiment;

Fig. 12A is a plan view illustrating a releasing mechanism, according to a third embodiment, in a condition immediately after the protrusion of the movable step is completed;

Fig. 12B is a cross sectional view of the releasing mechanism taken along line XIIB-XIIB in Fig. 12A;

Fig. 12C is a cross sectional view of the releasing mechanism taken along line XIIC-XIIC in Fig. 12A;

Fig. 13A is an explanatory view schematically illustrating an operation of the releasing mechanism according to the third embodiment;

Fig. 13B is an explanatory view schematically illustrating the operation of the releasing mechanism according to the third embodiment, in a condition where an operation lever is pulled;

Fig. 13C is an explanatory view schematically illustrating the operation of the releasing mechanism according to the third embodiment, in a condition where a latch of the releasing mechanism is pivoted in a counterclockwise direction;

Fig. 13D is an explanatory view schematically illustrating the operation of the releasing mechanism according to the third embodiment, in a condition where the releasing mechanism is released from a driving-side operating member;

Fig. 14 is a plan view illustrating the step apparatus for the vehicle according to a fourth embodiment; and

Fig. 15 is a plan view illustrating the step apparatus for the vehicle according to a fifth embodiment.

### DETAILED DESCRIPTION

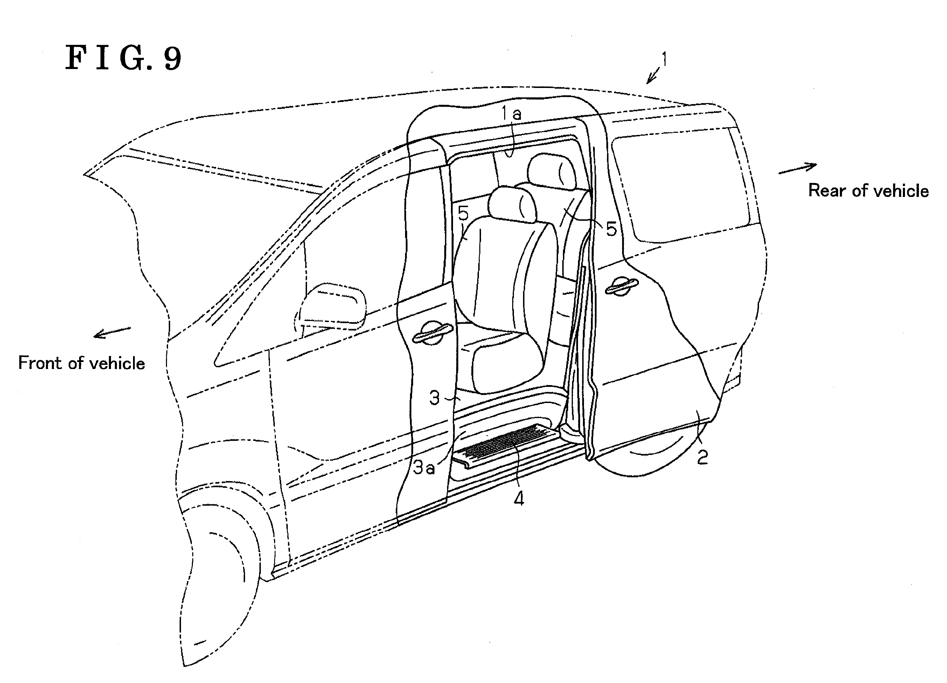

A first embodiment of the present invention will be described hereinafter with reference to attached drawings. Fig. 9 is a schematic view illustrating a vehicle, such as an automobile, adapted with embodiments of the present invention. As illustrated therein, a vehicle body 1 structuring the vehicle includes a door opening 1a. The door opening 1a is formed at a side portion of the vehicle body 1 and is opened and closed by a slide door 2, which serves as a vehicle door moving in a front-rear direction of the vehicle. A vehicle floor 3 (hereinafter referred to as a floor 3) is recessed toward inside of the vehicle so as to correspond to the door opening 1a, so that a platform 3a is formed. The platform 3a is provided with a movable step 4 at a height position being lower than the floor 3 so that one step can be close to a ground. The movable step 4 serves as a step member, which can be protruded from and accommodated inside the platform 3a (i.e., a step being moved) in a width direction (lateral direction) of the vehicle. In addition, a seat 5 is provided at a side area relative to the movable step 4 (the platform 3a) on the floor 3 and at a rear area relative to the movable step 4 (the platform 3a) on the floor 3. Hereinafter, directions, such as "front and rear", "longitudinal", "lateral" and "vertical", which are mentioned herein, correspond to an orientation of the vehicle.

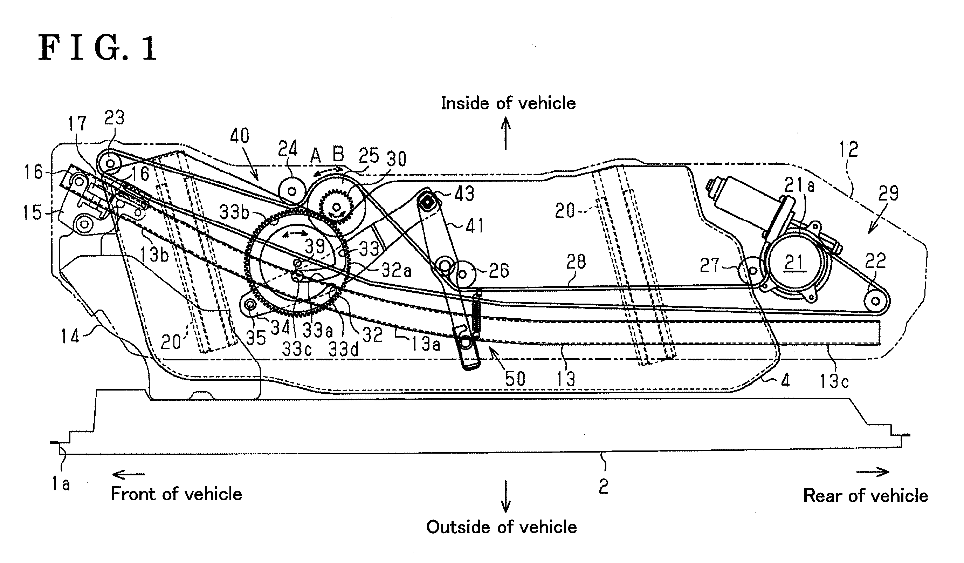

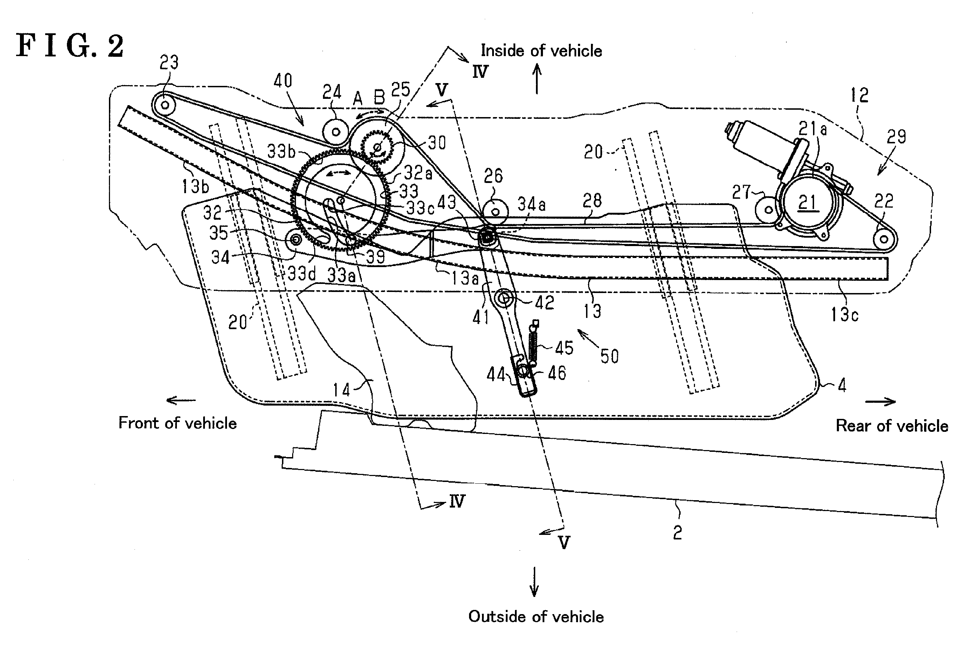

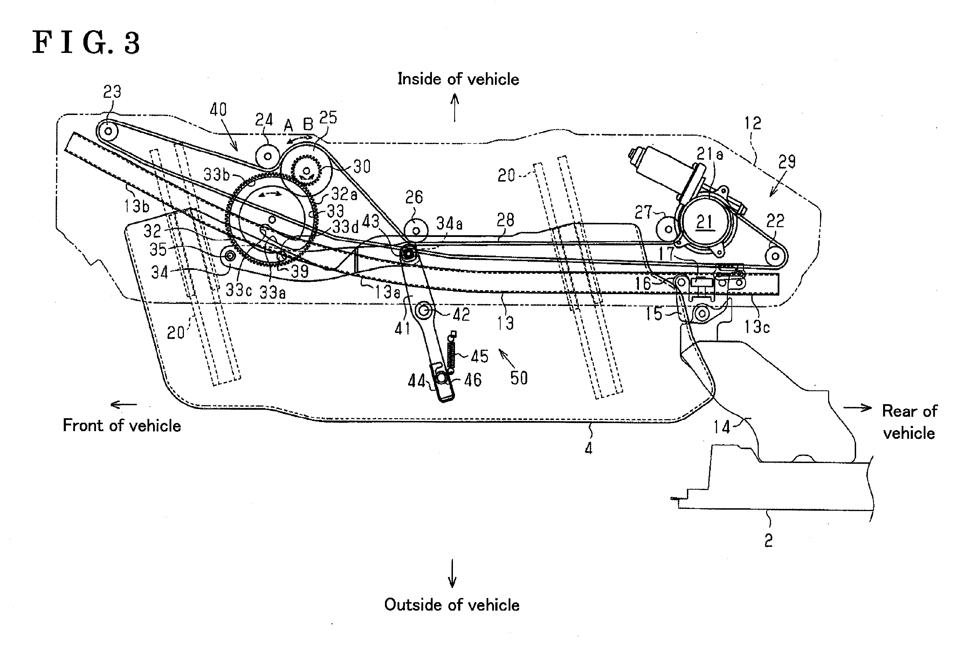

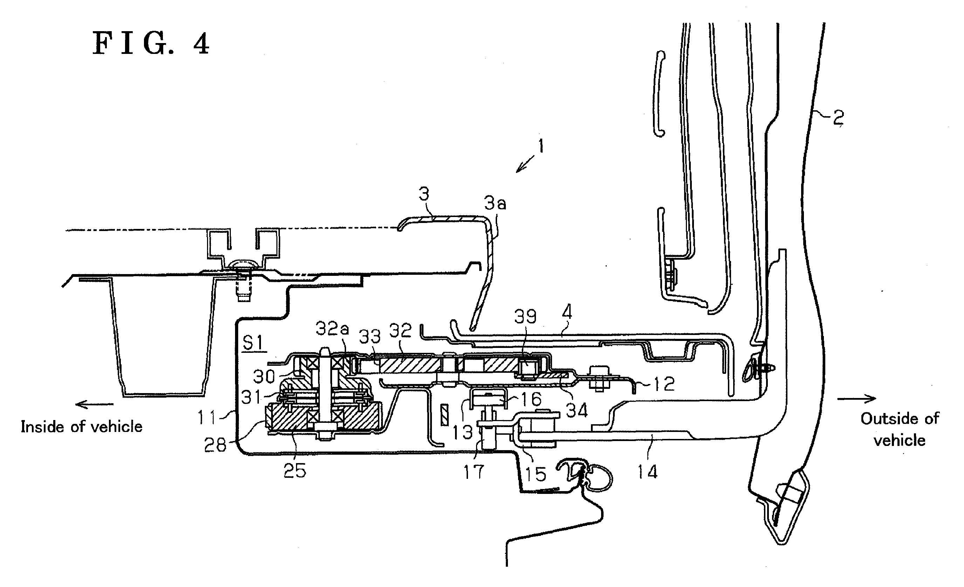

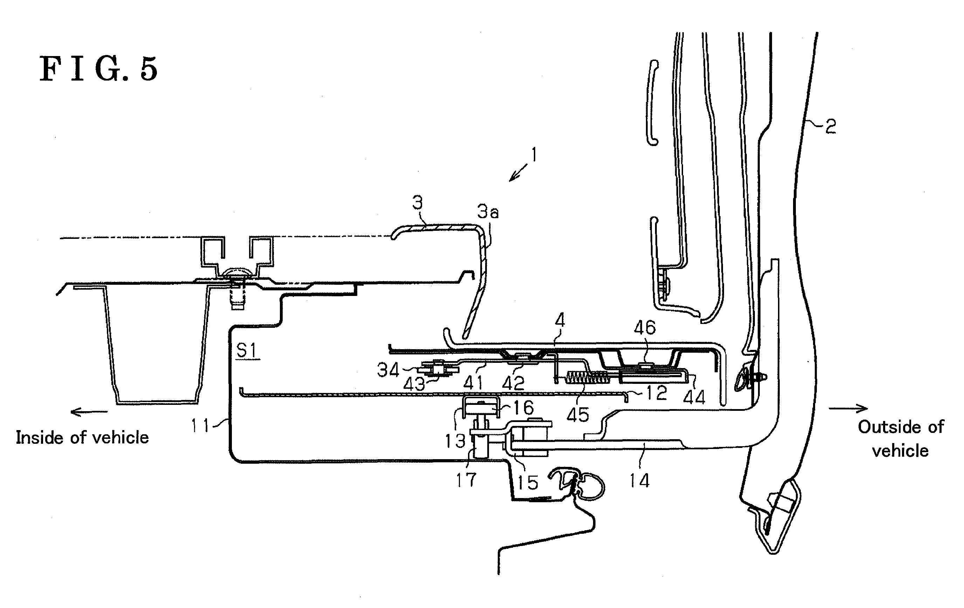

Next, a detailed structure of components relating to an actuation of the slide door 2 for opening and closing the same and an actuation of the movable step 4 for projecting and accommodating the same will be described hereinafter with reference to Figs. 1 to 7. Fig. 1 is a plan view illustrating a step apparatus for the vehicle according to the first embodiment when the slide door 2 is in a fully-closed state. Fig. 3 is a plan view illustrating the step apparatus for the vehicle according to the first embodiment when the slide door 2 is in a fully-opened state. Fig. 2 is a plan view illustrating the step apparatus for the vehicle in a state immediately after a protruding operation of the movable step 4 is completed. In figs. 1 to 3, upward and downward directions of the drawings correspond to an inside and an outside of the vehicle in the width direction thereof, respectively, and left and right directions of the drawings correspond to a front and rear direction of the vehicle, respectively. For an explanatory purpose, the movable step 4 and some other components are drawn, for example, with dotted lines so that a structure of the step apparatus can be well visible. Fig. 4 is a cross sectional view illustrating the step apparatus for the vehicle, taken along a line IV-IV in Fig. 2. Fig. 5 is a cross sectional view illustrating the step apparatus for the vehicle, taken along a line V-V in Fig. 2.

As illustrated in Fig. 4 and 5, the vehicle body 1 is securely provided with a box-shaped case 11 under the floor 3. The case 11 is opened towards the outside of the vehicle in the width direction thereof. The case 11 forms an accommodating space S1 under the floor 3. Further, the vehicle body 1 is securely provided with a support panel 12 at a vertically intermediate portion (i.e., an intermediate portion in a height direction) of the case 11. The support panel 12 extends towards the outside of the vehicle in the width direction so as not to interfere with the slide door 2. The movable step 4 is supported to the support panel 12 so as to be slidable via a rail member 20 (see Figs. 1 to 3) in a direction, where the movable step 4 is slightly inclined by a certain angle relative to the vehicle width direction. Additionally, the movable step 4 may be supported to the support panel 12 so as to be slidable perpendicularly relative to the front-rear direction of the vehicle (i.e., in a parallel direction with the width direction of the vehicle). As best shown in Fig. 1, the rail member 20 is provided at each longitudinal end portion of the movable step 4.

A guide rail 13 is securely provided at a lower surface of the support panel 12. The guide rail 13 is employed for guiding the opening and closing operations of the slide door 2. More specifically, as illustrated in Figs. 1 to 3, a bent portion 13a is provided at a longitudinally intermediate portion of the guide rail 13. Further, the guide rail 13 includes a curved portion 13b, which extends in the front direction of the vehicle from the bent portion 13a and is inclined inwardly in the vehicle width direction. Still further, the guide rail 13 includes a straight portion 13c, which extends in the rear direction of the vehicle from the bent portion 13a in a straight manner.

On the other hand, an arm 14 is provided at a lower portion of the slide door 2. The arm 14 protrudes inwardly in the width direction of the vehicle from the slide door 2, and a roller supporting member 15 is pivotally connected to an end portion of the arm 14. The roller supporting member 15 includes a pair of guide rollers 16 and a load roller 17 disposed between the guide rollers 16. Each of the guide rollers 16 has a rotation shaft extending in the height direction of the vehicle (i.e., in a direction being perpendicular to the paper surface on which Fig. 1 is drawn), and the load roller 17 includes a rotation shaft extending in a direction being perpendicular to a plane including the rotation shafts of the guide rollers 16 (i.e., in a lateral direction in Fig. 4). In the accommodating space S1, the roller supporting member 15 is movably supported on the case 11 (i.e., on the vehicle body 1) by means of the load roller 17 in a manner where the guide rollers 16 are rotatably movably mounted to the guide rail 13.

Accordingly, the guide rollers 16 are guided by the guide rail 13, and thereby the slide door 2, which is connected to the roller supporting member 15 via the arm 14, slides in the front-rear direction of the vehicle, hence allowing the door opening 1a to be opened and closed. A load of the slide door 2 is supported by means of the load roller 17. Specifically, the guide roller 16 is guided by the guide rail 13 at a front end portion (a portion located in a front direction of the vehicle) thereof relative to the bent portion 13a (i.e., at the curved portion 13b), and thereby the slide door 2 is pushed towards the outside direction of the vehicle right after the slide door 2 starts an opening operation from the fully-closed state, for example. In addition, the slide door 2 is pulled to the inside direction of the vehicle right before the slide door 2 reaches the fully-closed state in the same manner as described above. Thereby, the slide door 2 is allowed to slide in the rear direction of the vehicle during the opening operation and is arranged to be on a same surface with a side surface of the vehicle body 1 when the slide door 2 is fully closed.

Here, a mechanism for actuating the slide door 2 to be opened and closed is mounted to the support panel 12 at a portion which is inner side of the vehicle in a width direction relative to the guide rail 13. More specifically, the support panel 12 is provided with a slide door actuating unit 21, a plurality of idle gears 22, 23, 24, 25, 26 and 27 and an actuating belt 28. The slide door actuating unit 21 serves as an electric driving source. As best shown in Figs. 1 to 3, the idle gears 22, 23, 24, 25, 26 and 27 are arranged in ascending order in a clockwise direction in Figs. 1 to 3. The actuating belt 28 is arranged around an output gear 21a of the slide door actuating unit 21 and around the idle gears 22, 23, 24, 25, 26 and 27 so as to be engaged with these gears. The idle gears 22 to 27 and the actuating belt 28 structure a door opening and closing mechanism 29 serving as a first transmitting device.

The slide door actuating unit 21 is secured to the support panel 12 and actuates the output gear 21a to rotate. The idle gears 22, 23, 24, 25, 26 and 27 are rotatably supported by the support panel 12. Additionally, the idle gear 22 corresponds to a rear end of the guide rail 13 and is disposed adjacent thereto. On the other hand, the idle gear 23 corresponds to a front end of the guide rail 13 and is disposed adjacent thereto. Further, the idle gear 25 is disposed at an intermediate area between the idle gears 22 and 23 and in an area closer to the inside of the vehicle relative to the guide rail 13. Still further, an appropriate idle gear (not illustrated) is disposed at an area between the idle gears 22 and 23, the area which is adjacent to the bent portion 13a of the guide rail 13, and is engaged with the actuating belt 28.

Then, an end portion of the roller supporting member 15 is securely connected to the actuating belt 28 at an area thereof, which is disposed along the guide rail 13 and between the idle gears 22 and 23. When the slide door 2 is in the fully-closed state as shown in Fig. 1, the end portion of the roller supporting member 15 is located adjacent to the idle gear 23, i.e., adjacent to a front end portion of the guide rail 13. When the slide door 2 is in the fully-opened state as illustrated in Fig. 3, the end portion of the roller supporting member 15 is located adjacent to the idle gear 22, i.e., adjacent to a rear end portion of the guide rail 13.

Accordingly, when the output gear 21a is actuated to rotate in a counterclockwise direction in Figs 1 and 2 by the slide door actuating unit 21 at conditions illustrated therein, the actuating belt 28 is moved in the counterclockwise direction, i.e., a portion, of the actuating belt 28, being disposed along the guide rail 13 and between the idle gears 22 and 23, is moved in the rear direction of the vehicle, while allowing the idle gears 22 to 27 to rotate. At this time, the idle gear 25 rotates in the counterclockwise direction (in a direction of an arrow A) in Figs. 1 and 2. Then, the slide door 2, which is connected to the actuating belt 28 via the roller supporting member 15 and so on, moves (slides) in the rear direction of the vehicle along the guide rail 13, hence the door opening 1a is opened.

On the other hand, when the output gear 21a of the slide door actuating unit 21 is actuated to rotate in the clockwise direction by means of the slide door actuating unit 21 at conditions illustrated in Figs, 2 and 3, the actuating belt 28 is moved in the clockwise direction, i.e., the portion, of the actuating belt 28, being disposed along the guide rail 13 and between the idle gears 22 and 23, is moved in the front direction of the vehicle, while allowing the idle gears 22 to 27 to rotate. At this time, the idle gear 25 rotates in the clockwise direction (i.e., in a direction of an arrow B). Then, the slide door 2, which is connected to the actuating belt 28 via the roller supporting member 15 and so on, moves (slides) in the front direction of the vehicle along the guide rail 13, hence the door opening 1a is closed.

As illustrated in Fig. 4, a gear 30 is rotatably supported by the support panel 12. The gear 30 is arranged at an upper side of the idle gear 25 so as to be coaxial therewith. In addition, a torque limiter 31 is provided between the idle gear 25 and the gear 30. The torque limiter 31 limits torque, which can be transmitted between the idle gear 25 and the gear 30, to a predetermined value. Further, a disc-shaped plate cam 32 is rotatably supported to the support panel 12, and a gear portion 32a is formed at an outer periphery of the plate cam 32. The gear portion 32a of the plate cam 32 is engaged with the gear 30.

Accordingly, when the transmitting torque applied to the gear 30 is equal to or lower than the predetermined value, the idle gear 25 allows the gear 30 to integrally rotate with the idle gear 25 via the torque limiter 31 and actuates the plate cam 32 to rotate.

As illustrated in Fig. 1, the plate cam 32 is formed with a grooved cam 33. The grooved cam 33 includes a first recessed portion 33a and a second recessed portion 33b. The first recessed portion 33a extends so that a radius relative to a rotational axis of the plate cam 32 (i.e., a direction from the first recessed portion 33a to the rotational axis of the plate cam 32) is not arranged to be constant. The second recessed portion 33b extends in a circumferential direction so that a radius relative to the rotational axis of the plate cam 32 (i.e., a direction from the second recessed portion 33b to the rotational axis of the plate cam 32) is arranged to be constant. The second recessed portion 33b is connected continuously to the first recessed portion 33a.

On the other hand, one end of an elongated lever 34 serving as a driving-side operating member, is connected to the support panel 12 so as to be rotatable about a pin 35. The lever 34, the pin 35, the gear 30 and the plate cam 32 structure a step moving mechanism 40, which serves as a second transmitting device and which is employed for protruding and accommodating the movable step 4.

A bush 39, which is accommodated in the grooved cam 33, is secured to a longitudinally intermediate portion of the lever 34. When the slide door 2 is in a fully-closed position (a position corresponding to the fully-closed state), the bush 39 is set to be disposed at an end 33c of the first recessed portion 33a (see Fig. 1). On the other hand, when the slide door 2 is in a fully-opened position (a position corresponding to the fully-opened state), the bush 39 is set to be disposed in an end 33d of the second recessed portion 33b (see Fig. 3). More specifically, a speed reduction ratio of the gear 30 and the gear portion 32a of the plate cam 32 is set so that the bush 39 completes its movement from the end 33c of the first recessed portion 33a to the end 33d of the second recessed portion 33b when the slide door 2 completes its movement from the fully-closed position to the fully-opened position.

Further, as best shown in Fig. 2, the bush 39 is set to be disposed at a position where the first recessed portion 33a and the second recessed portion 33b are connected to each other (hereinafter, the position is referred to as a connecting portion), when the slide door 2 reaches a predetermined opening and closing position (a door opening degree), where a passenger of the vehicle is allowed to enter to and exit from the vehicle. Then, when the bush 39 is positioned in the first recessed portion 33a (see Figs. 1 and 2), the plate cam 32 pushes the bush 39 in the grooved cam 33 (in the first recessed groove 33a) in accordance with the rotation of the plate cam 32, and allows the lever 34 to pivotally move around the pin 35. In addition, when the bush 39 is in the second recessed portion 33b (see Figs. 2 and 3), the plate cam 32 restrains a movement of the bush 39 (i.e., a movement in a radial direction when the rotating shaft of the plate cam 32 is assigned as a center) at the grooved cam 33 (the second recessed portion 33b) and restrains a pivoting movement of the lever 34 about the pin 35 in accordance with the rotation of the plate cam 32.

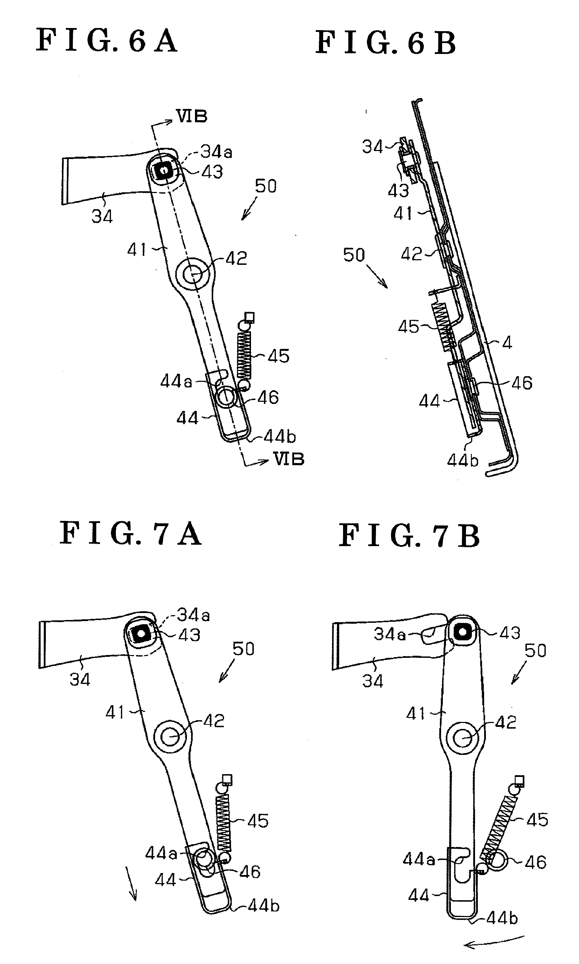

An elongated releasing lever 41 is connected to the other end of the lever 34. The releasing lever 41 serves as a driven-side operating member, which is connected to the movable step 4. Fig. 6A is an enlarged view illustrating the releasing lever 41 illustrated in Fig. 2. Fig. 6B is an enlarged cross-sectional view of the releasing lever 41 taken along a line VIB-VIB in Fig. 6A (i.e., an enlarged view of Fig. 5). More specifically, as illustrated therein, the other end of the lever 34 is formed with an engagement groove 34a. The engagement groove 34a serves as a driving-side engagement member, which is cut out in a U-shape along a longitudinal direction of the lever 34. On the other hand, the releasing lever 41 is connected to the movable step 4 at its longitudinally intermediate portion so as to be pivotable about the pin 42. Further, an engagement pin 43 protrudes from one end of the releasing lever 41. The engagement pin 43 serves as a driven-side engagement member, which is attachable to and detachable from the engagement groove 34a. The releasing lever 41 is designed so that the engagement groove 34a and the engagement pin 43 are engaged with each other when the releasing lever 41 is located at a predetermined pivotal position as illustrated in Figs. 6A and 6B. The predetermined pivotal position serves as a predetermined relative engaging position between the driving-side engagement portion (the engagement groove 34a) of the driving-side operating member (the lever 34) and the driven-side engagement portion (the engagement pin 43) of the driven-side operating member (the releasing lever 41). The predetermined pivotal position is a position where the engagement groove 34a of the lever 34 and the engagement pin 43 of the releasing lever 41 are relatively rotated, or pivoted by being engaged with each other so that the movable step 4 is moved between an accommodated position of the movable step 4 and a protruded position thereof. In addition, the releasing lever 41 is positioned so that the longitudinal direction thereof corresponds to a longitudinal direction of the rail member 20 when being at the predetermined pivotal position shown in Figs. 6A and 6B.

The other end of the releasing lever 41 is provided with an operating member 44, which serves as a first engagement member, in a manner where the operating member 44 is guided by the releasing lever 41 and is allowed to relatively move in the longitudinal direction of the releasing lever 41. The operating member 44 is connected with a spring 45 serving as a biasing member. More specifically, one end of the spring 45 is connected to the movable step 4, and the other end of the spring 45 is connected to the operating member 44. The operating member 44 is held in a predetermined position illustrated in Figs. 6A and 6B, the predetermined position where the operating member 44 is biased by the spring 45 and is restrained from moving in a direction where the engagement pin 43 is located. Additionally, the operating member 44 is formed with an L-shaped engagement recess 44a, which opens to a right side of the releasing lever 41 in Fig. 6A. An inner portion of the engagement recess 44a is recessed along the longitudinal direction of the releasing lever 41 so as to be away from the pin 42. Further, the other end of the operating member 44 is formed with a rib 44b, which is employed for inputting a manual operation, along a peripheral portion of the operating member 44.

The movable step 4 is securely attached with an engagement pin 46 serving as a second engagement member. When the releasing lever 41 is located at the predetermined pivotal position, the operating member 44 (the engagement recess 44a) and the engagement pin 46 are engageable with and disengageable from each other. Further, when the releasing lever 41 is located at the predetermined pivotal position, the spring 45 biases the operating member 44 so that the engagement pin 46 is fitted into the engagement recess 44a and thereby the operating member 44 is engaged with the engagement pin 46. Accordingly, when the releasing lever 41 is located at the predetermined pivotal position and in a case where the operating member 44 and the engagement pin 46 are engaged with each other, the releasing lever 41 is unpivotably connected to the movable step 4. At this time, the lever 34 is connected to the movable step 4 so as to move in association therewith via the releasing lever 41. Accordingly, the movable step 4 is projected and/or accommodated in association with a pivotal movement of the lever 34, which is pivoted in accordance with the plate cam 32, while the movable step 4 is secured in accordance with a stop of the pivotal movement of the lever 34.

Additionally, the lever 34 is pivoted about the pin 35 as a rotating center, and thereby the movable step 4 can be moved, i.e., projected and accommodated, by a moving amount of the other end of the lever 34 (i.e., the engagement groove 34a) in a longitudinal direction of the rail member 20. Herein, the engagement groove 34a is connected to the releasing lever 41 so that a moving amount of the lever 34 in a lateral direction (i.e., right and left direction in Fig. 1) of the rail member 20 is absorbed. In other words, the longitudinal direction of the engagement groove 34a corresponds to the lateral direction of the rail member 20. In addition, when the engagement pin 43 is relatively moved inside the engagement groove 34a, thereby the other end of the lever 34 is allowed to move in the lateral direction of the rail member 20 in accordance with the pivotal movement of the lever 34.

Hereinafter, a normal operation of the step apparatus for the vehicle according to the first embodiment will be described. Herein, the transmitting torque of the torque limiter 31, which is provided between the idle gear 25 and the gear 30, is assigned not to exceed a certain value in the normal operation.

Firstly, in a case where the actuating belt 28 is moved in the direction of the arrow A illustrated in Figs. 1 and 2 so as to operate the slide door 2 to be opened at the fully-closed position of the slide door 2, the idle gear 25 integrally rotates with the gear 30 in the counterclockwise direction in the drawings. Then, the plate cam 32, which is engaged with the gear 30, rotates in the clockwise direction in Figs. 1 and 2 with the grooved cam 33. At this time, the bush 39 accommodated in the first recessed portion 33a is pushed thereby, and the lever 34, to which the bush 39 is secured, is pivoted about the pin 35 as the rotational center in the clockwise direction illustrated in Figs. 1 and 2. Then, the movable step 4 is operated to be protruded via the releasing lever 41, which is connected to the other end of the lever 34.

When the slide door 2 reaches the predetermined opening and closing position, where the passenger is allowed to enter to and exit from the vehicle, the bush 39 enters in the second recessed portion 33b from the first recessed portion 33a, of the grooved cam 33, as illustrated in Fig. 2. Accordingly, a path for transmitting force from the idle gear 25 and the gear 30 to the lever 34 via the plate cam 32 is interrupted and the protruding operation of the movable step 4 is completed (hereinafter, the path is referred to as a force transmitting path). Then, the slide door 2 moves to the fully-opened position in a manner where the protruding operation is completed (see Fig. 3). At this time, the bush 39 is positioned at the end 33d of the second recessed portion 33b, as is aforementioned.

On the other hand, in a case where the actuating belt 28 is moved in the direction of the arrow B illustrated in Fig. 3 so as to operate the slide door 2 to be closed at the fully-opened position of the slide door 2, the idle gear 25 integrally rotates with the gear 30 in the clockwise direction in the drawing. Then, the plate cam 32 being engaged with the gear 30 rotates with the grooved cam 33 in the counterclockwise direction in Fig. 3. At this time, the bush 39 accommodated in the second recessed portion 33b is not pushed out from the second recessed portion 33b. In other words, at the beginning of the closing operation of the slide door 2, force to push the bush 39 does not act and the movable step 4 is not operated.

Then, when the slide door 2 reaches a predetermined opening and closing position where the passenger may not enter to and exit from the vehicle, the bush 39 enters in the first recessed portion 33a from the second recessed portion 33b, of the grooved cam 33, as illustrated in Fig. 2. Therefore, the force transmitting path from the idle gear 25 and the gear 30 to the lever 34 via the plate cam 32 is established and the accommodating operation of the movable step 4 is started. Then, the bush 33b accommodated in the first recessed portion 33a is pushed thereby, and the lever 34, to which the bush 39 is connected, is pivoted in the counterclockwise direction about the pin 35 as the rotating center. Further, the movable step 4 is operated to be accommodated via the releasing lever 41, which is connected to the end of the lever 34.

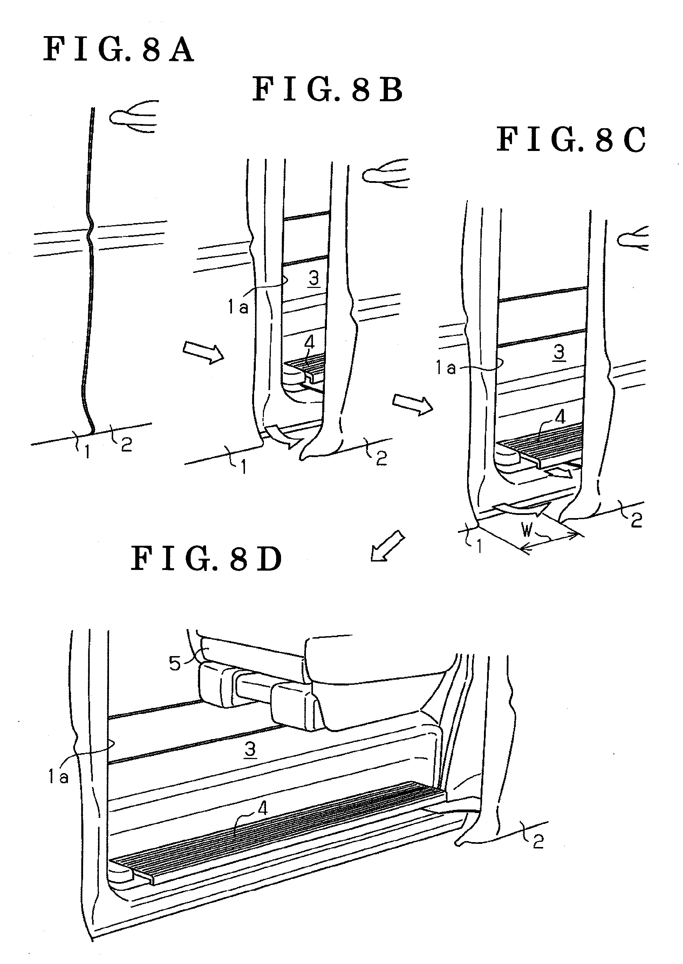

Figs. 8A to 8D are explanatory views respectively schematically illustrating the normal operation of the slide door 2 and of the movable step 4 corresponding to the operation of the slide door 2. As illustrated therein, when the opening operation of the slide door 2 is started (see Fig. 8B) at the fully-closed state of the slide door 2 (see Fig. 8A), the force transmitting path from the plate cam 32 is established and therefore, the movable step 4 starts to protrude in association with the plate cam 32. Then, as illustrated in Fig. 8C, when the opening degree of the slide door 2 changes to a door opening degree W corresponding to the predetermined opening and closing position, the force transmitting path from the plate cam 32 is interrupted and therefore, the protruding operation of the movable step 4 is completed. Next, when the slide door 2 is further operated to be opened beyond the predetermined opening and closing position, the slide door 2 is fully opened in a state where the movable step 4 is remained at the protruded position (see Fig. 8D). In addition, when the slide door 2 is operated to be fully closed at the fully operated state, the slide door 2 and the movable step 4 are operated in an approximately inverted order of the order of the operation described above.

Herein, a failure, where the step moving mechanism 40 is immovable (i.e., hardly moves or is not allowed to move) because of being fixed, or for example being frozen due to congelation (freezing temperatures), is assigned to have occurred. Hereinafter, such failure is referred to as an immovable failure. At this time, an operator (for example, the passenger of the vehicle) puts his/her fingers, for example, underneath the movable step 4 to hook the rib 44b of the operating member 44, and applies manual operational force in a manner where the operating member 44 is pulled in the direction to be away from the pin 42 (i.e., in a downward direction of paper on which Figs. 7A and 7B are illustrated, or in a direction to the outside of the vehicle) against the spring 45, as is illustrated in Fig. 7A. Hence the operating member 44 moves along the longitudinal direction of the releasing lever 41 to a position where an opening of the engagement recess 44a corresponds to the engagement pin 46. Then, the engagement between the operating member 44 and the engagement pin 46 is released. In such a condition, when the manual operational force is applied so as to pivot the releasing lever 41 in the clockwise direction with the operating member 44 as illustrated in Fig. 7B, the engagement between the engagement groove 34a of the lever 34 and the engagement pin 43 is released, and the connection between the step moving mechanism 40 and the movable step 4 is released. Therefore, even in a case where the immovable failure has occurred to the step moving mechanism 40, the movable step in a protruded state can be accommodated in the accommodating space S1 of the case 11 illustrated in Figs. 4 and 5 (i.e., inside the platform 3a) by a manual operation. The releasing lever 41, the operating member 44, the spring 45 and the engagement pin 46 structures a releasing mechanism 50 serving as a releasing portion.

As described above, according to the first embodiment, the following effects, which will be described hereinafter, may be obtained. According to the first embodiment, first, when the operating member 44 is moved against the spring 45 in accordance with applying the manual operational force to the operating member 44, the engagement between the operating member 44 and the engagement pin 46 is released. In such a condition, when the releasing lever 41 is pivoted with the operating member 44, the engagement between the engagement groove 34a and the engagement pin 43 is released and the connection between the lever 34 (the step moving mechanism 40) and the movable step 4 is released. Therefore, even in a case where the immovable failure has occurred to the step moving mechanism 40, the movable step 4 in the protruded state is manually accommodated in the platform 3a and accordingly, the slide door 2 can be operated to be closed without being interrupted by the movable step 4.

According to the first embodiment, second, when the slide door 2 is located within a range of the predetermined opening and closing position, the driving force (torque) of the slide door actuating unit 21 is transmitted to the movable step 4 via the door opening and closing mechanism 29 hence protruding and accommodating the movable step 4. At this time, the grooved cam 33, which relates to the engagement of the plate cam 32 actuated to rotate by the idle gear 25 (gear 30) with the bush 39, is set so that the movable step 4 is protruded and accommodated by mechanically synchronizing the operation thereof with the opening and closing operations of the slide door 2, the opening and closing operation being performed within the range of the predetermined opening and closing position. Accordingly, a motor for protruding and accommodating a step, a detecting switch for detecting a protrusion of the step to a predetermined position, a control circuit for controlling the motor on the basis of a signal of the detecting switch, and so on, which are disclosed in JP04(1992)-003870Y, may not be required. Therefore, a configuration of a system of the step apparatus according to the embodiment of the present invention may be simple. In addition, the slide door 2 and the movable step 4 move in association with each other. Therefore, for example, a complicated control for preventing the slide door 2 and the movable step 4 from interrupting with each other is not required, thus leading to reduce a cost for the apparatus.

Third, in a case where the slide door 2 is opened and closed manually, the actuating belt 28 is moved in accordance with the opening and closing operations of the slide door 2. Therefore, in accordance with the above described operation, the torque is transmitted from the idle gear 25 (gear 30) to the plate cam 32 because of rotations of such gears. Accordingly, even in such case, the movable step 4 is protruded and/or accommodated in association with the opening and/or closing operation, of the slide door 2, within the range of the predetermined opening and closing position.

According to the first embodiment, fourth, a recessed space formed on a feet of the passenger to be seated on the seat 5 is arranged to be small. Therefore, for example, the passenger can be prevented from sitting in an unnatural manner, and luggage loaded in a compartment of the vehicle can be prevented from dropping on the recessed space.

(Second embodiment) A second embodiment of the present invention will be described hereinafter with reference to the attached drawings. In the second embodiment, a manner for fixing the driven-side operating member (releasing lever), in the first embodiment, relative to the movable step 4 is modified. However, other components are used in the same manner as the first embodiment and a detailed description will be omitted herein.

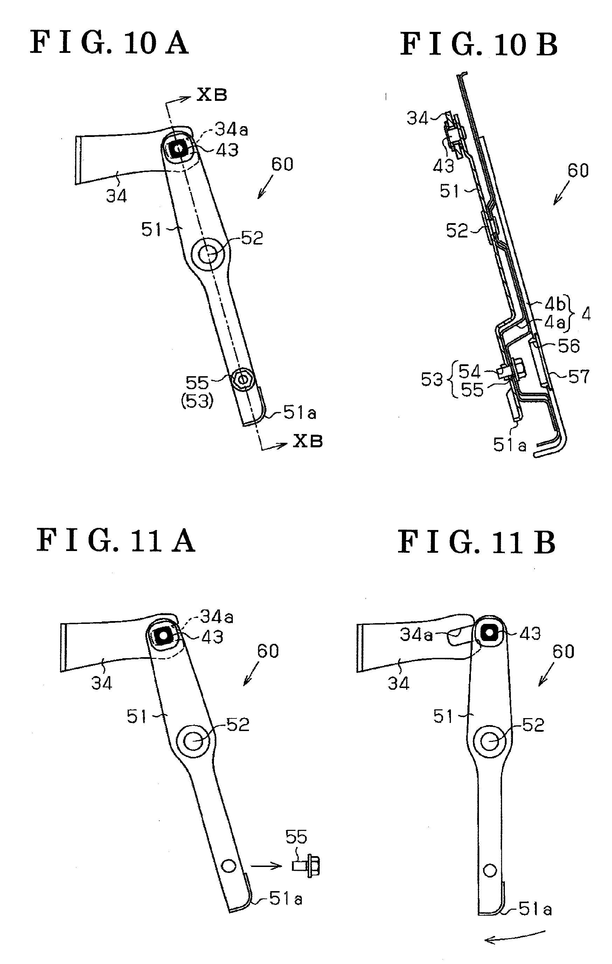

Fig. 10A is a planar view illustrating a releasing mechanism 60 in a condition where a protrusion of the movable step 4 is completed (see Fig. 2). Fig. 10B is a cross sectional view of the releasing mechanism 60 taken along a line XB-XB in Fig. 10A. As illustrated therein, a releasing lever 51 serving as the driven-side operating member is connected to the movable step 4 so as to be pivotable about a pin 52 at its longitudinally intermediate portion. Further, the engagement pin 43 protrudes from one end of a releasing lever 51, in the same manner as the first embodiment. The releasing lever 51 is arranged so that a longitudinal direction thereof corresponds to the longitudinal direction of the rail member 20 (see Fig. 2) when being located at a predetermined pivotal position (serving as a predetermined relative engaging position between the driving-side engagement portion (the engagement groove 34a) of the driving-side operating member (the lever 34) and the driven-side engagement portion (the engagement pin 43) of the driven-side operating member (the releasing lever 51)) illustrated in Figs. 10A and 10B. When the releasing lever 51 is positioned at the predetermined pivotal position, the lever 34 and the releasing lever 51 are relatively pivoted with each other so that the movable step 4 is moved to be protruded and accommodated.

The other end of the releasing lever 51 is provided with a connecting member 53, which is detachable from the releasing lever 51 and thus from the movable step 4, i.e., which is provided for attaching the releasing lever 51 to the movable step 4 and detaching the releasing lever 51 from the movable step 4. When the releasing lever 51 is located at the predetermined pivotal position, the connecting member 53 secures the releasing lever 51 to the movable step 4 so as not to rotate. In other words, as illustrated in Fig. 10, the movable step 4 is structured with a frame 4a and a decorative plate 4b made of resin. The frame 4a serves as a framework of the movable step 4, and the decorative plate 4b is mounted on the frame 4a. On the other hand, the connecting member 53 is structured with a nut portion 54 and a bolt 55. The nut portion 54 is formed at the releasing lever 51. The bolt 55 inserts through the frame 4a of the movable step 4, in a manner where a head portion of the bolt 55 is exposed to a surface of the frame 4a at a side of the decorative plate 4b, and is tightened by the nut portion 54. Additionally, the decorative plate 4b of the movable step 4 is formed with an opening portion 56, through which a tool such as a wrench, for example, for removing the connecting member 53 (bolt 55) can be inserted. Further, the opening portion 56 is closed (covered) with a plug 57 serving as a closing member so as to be closed or occluded. The plug 57 is attached to the movable step 4 so as to close (cover) the opening portion 56 and is detachable from the movable step 4. Still further, the other end of the releasing lever 51 is formed with a rib 51a along its rim portion. The rib 51a is employed for inputting the manual operational force.

Accordingly, when the releasing lever 51 is located at the predetermined pivotal position, and in a case where the releasing lever 51 is unpivotably secured to the movable step 4 (the frame 4a) by means of the connecting member 53, the lever 34 is connected to the movable step 4, so as to move in association therewith, via the releasing lever 51. Accordingly, the movable step 4 is protruded and accommodated in association with the pivotal movement of the lever 34 in accordance with the rotation of the plate cam 32, while the movable step 4 is secured in accordance with a stop of the pivotal movement of the lever 34, in the same manner as the first embodiment. Then, the normal operation is performed in the same manner as the first embodiment (see Fig. 8).

Herein, the immovable failure, where the step moving mechanism 40 hardly moves or is not allowed to move because of being fixed or for example being frozen due to the congelation, is assigned to have occurred. At this time, when the plug 57 is removed from the opening portion 56 and the connecting member 53 (bolt 55) is removed from the frame 4a by means of the tool inserted through the opening portion 56, the releasing lever 51 is allowed to be pivoted relative to the movable step 4, as illustrated in Fig. 11A. In such a condition, when the operator (the passenger of the vehicle, for example) puts his/her fingers, for example, underneath the movable step 4 to hook the rib 5 1a of the releasing lever 51, and applies the manual operational force in a manner where the releasing lever 51 is pivoted in the counterclockwise direction of the drawings, the engagement between the engagement grove 34a of the lever 34 and the engagement pin 43 is released and the connection between the step moving mechanism 40 and the movable step 4 is released. As described above, even in a case where the immovable failure has occurred to the step moving mechanism 40, the movable step 4 in the protruded state can be accommodated inside the platform 3a of the floor 3 with the manual operation. The releasing lever 51, the connecting member 53, the opening portion 56 and the plug 57 structure the releasing mechanism 60 serving as a releasing portion.

As described above, according to the second embodiment, a following effect, which will be described hereinafter, will be obtained in addition to the second to fourth effects in the first embodiment. According to the second embodiment, when the plug 57 is removed from the opening portion 56 and the connecting member 53 is removed from the movable plate 4 by means of the tool inserted from the opening portion 56, the releasing lever 51 is allowed to be pivoted relative to the movable step 4. In such a condition, in accordance with applying the manual operational force, when the releasing lever 51 is pivoted, the engagement between the engagement groove 34a and the engagement pin 43 is released and the connection between the lever 34 (step moving mechanism 40) and the movable step 4 is released. Thus, even in a case where the immovable failure has occurred to the step moving mechanism 40, the movable step 4 in the protruded state can be manually accommodated and the slide door 2 can be operated to be closed without being interrupted by the movable step 4.

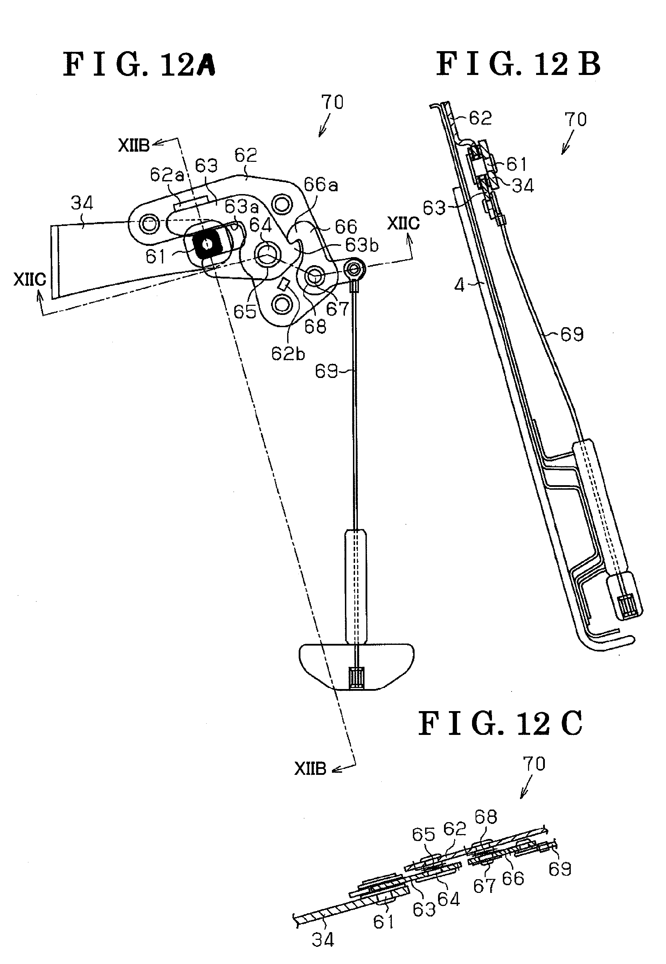

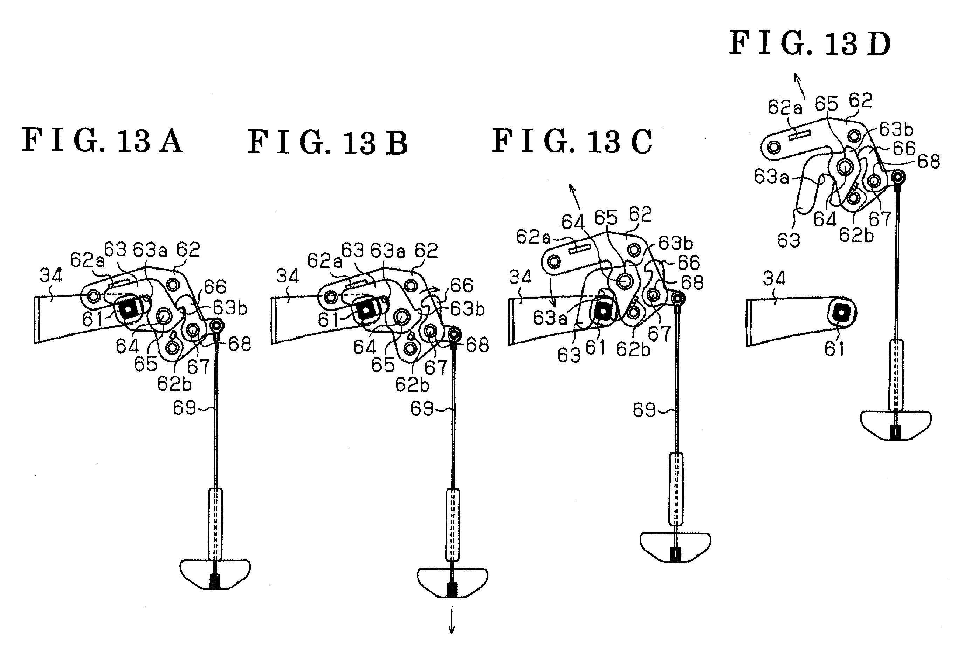

(Third embodiment) A third embodiment of the present invention will be described hereinafter with reference to Figs. 12A to 12C and Figs. 13A to 13D. According to the third embodiment, a manner of the connection of the driving-side operating member (lever 34) relative to the movable step 4 is modified. However, other components are used in the same manner as the first embodiment and a detailed description will be omitted herein.

Fig. 12A is a plan view illustrating a releasing mechanism 70 in a condition immediately after the protrusion of the movable step 4 is completed (see Fig. 2). Fig. 12B is a cross sectional view of the releasing mechanism 70 taken along line XIIB-XIIB in Fig. 12A. Fig. 12C is a cross sectional view of the releasing mechanism 70 taken along line XIIC-XIIC in Fig. 12A. Figs. 13A, 13B, 13C and 13D are explanatory views respectively illustrating movements of the releasing mechanism 70 when the movable step 4 is operated to be accommodated with the manual operation. According to the third embodiment, as best shown in Fig. 12A, a bush 61 serving as an engagement portion protrudes from the other end of the lever 34 in place of the engagement groove 34a. On the other hand, a base plate 62 is securely provided at a lower surface of the movable step 4. Further, a latch 63, which is made of a plate member, is connected to the base plate 62 so as to be rotatable about a pin 64. Additionally, the latch 63 includes a U-shaped grooved portion 63a and a nail portion 63b. The grooved portion 63 a is engageable with and disengageable from the bush 61.

The latch 63 is designed so that the bush 61 is fitted into the grooved portion 63a at a predetermined pivotal position (serving as a predetermined relative engaging position between the engagement portion (61) of the driving-side operating member (the lever 34) and the grooved portion (63a) of the latch (63)) illustrated in Fig. 12A. When the latch 63 is positioned at the predetermined pivotal position, the lever 34 and the latch 63 are relatively rotated, or pivoted, with each other so that the movable step 4 is moved to be protruded and accommodated. Further, a spring 65 serving as a first biasing member is provided about the pin 64. The spring 65 biases the latch 63 in a direction where the latch 63 is pivoted in the counterclockwise direction about the pin 64 so that the bush 61 is released from the grooved portion 63a from being disposed thereinto when the latch 63 is located at the predetermined pivotal position.

Further, a pawl 66 made of a plate member is connected to the base plate 62 so as to be pivotable about a pin 67. The pawl 66 includes a hook portion 66a, which is engageable with and disengageable from the nail portion 63b of the latch 63 when the latch 63 is located at the predetermined pivotal position. Then, a spring 68 serving as a second biasing member is provided about the pin 67. The spring 68 biases the pawl 66 in a direction where the pawl 66 is pivoted in the counterclockwise direction in Fig. 12A and Figs. 13A to 13D about the pin 67, i.e., in a direction where the pawl 66 contacts with the latch 63 so that the hook portion 66a is locked by the nail portion 63b and the latch 63 is engaged with the pawl 66, when the latch 63 is located at the predetermined pivotal position. Accordingly, the latch 63 is locked and prevented from being pivoted in the counterclockwise direction in the drawings about the pin 64.

Additionally, the base plate 62 is provided with a stopper 62a, which restrains the latch 63 to be located at the predetermined pivotal position. Therefore, the latch 63 is firmly restrained from being pivoted in the clockwise direction about the pin 64, beyond the predetermined pivotal position.

An operation lever 69 is pivotably connected to the pawl 66. The operation lever 69 is attached to the movable step 4 and is employed for inputting the manual operational force. As illustrated in Fig. 13B, when the manual operational force is applied in a manner where the operation lever 69 is pulled in a front direction (i.e., in a direction indicated with an arrow illustrated in Fig. 13B) at a condition where the latch 63 and the pawl 66 are engaged with each other as illustrated in Fig. 13A, the pawl 66 is pivoted in the clockwise direction of the drawings about the pin 67 against the spring 68. At this time, the hook portion 66a of the pawl 66 is removed from the nail portion 63b of the latch 63.

Accordingly, as illustrated in Fig. 13C, the latch 63 is biased by the spring 65 and is pivoted about the pin 64 in the counterclockwise direction in the Figs. 13A to 13D. Then, the engagement between the bush 61 and the grooved portion 63a of the latch 63 is released, and the connection between the step moving mechanism 40 and the movable step 4 is released. Therefore, as illustrated in Fig. 13D, the movable step 4 (not illustrated therein) in the protruded state with components such as the latch 63 can be accommodated by the manual operation.

Additionally, the base plate 62 is securely attached with a stopper 62b serving as a restraining member. The stopper 62b is employed for restraining the latch 63, which is pivoted in the counterclockwise direction, to be positioned at the predetermined pivotal position (hereinafter, referred to as a restrained pivot position in the third embodiment). Accordingly, the latch 63 being released from the engagement with the pawl 66 is limited in the restrained pivotal position by means of the stopper 62b (see Fig. 13c). Here, the latch 63 is designed so that the grooved portion 63a thereof is opened to a side to face, or to be exposed to, the bush 61 wherever the bush 61 (lever 34) is positioned in the normal operation. Further, when the movable step 4, which is in an accommodated state with the components such as the latch 63, is protruded by the manual operation, the bush 61 is fitted into the grooved portion 63a of the latch 63. In other words, the latch 63, which moves in response to the protrusion of the movable step 4, is pushed by the bush 61 being fitted into the grooved portion 63a of the latch 63, and thereby the latch 63 is pivoted in the counterclockwise direction in the drawings against the spring 65. Then, the latch 63 is restrained by the stopper 62a of the base plate 62 and is returned to the restrained pivotal position and is engaged with the pawl 66 again. Further, the bush 61 can be fitted into, or engaged with, the grooved portion 63a of the latch 63 by moving the lever 34 to a condition corresponding to the fully-closed position of the slide door 2 relative to the movable step 4 being in the accommodated state with the components such as the latch 63 and so on.

In such a configuration, when the latch 63 is located at the predetermined pivotal position and in a case where the latch 63 is engaged with the pawl 66, the latch 63 is unpivotably connected relative to the movable step 4. At this time, the lever 34 is connected to the movable step 4 so as to move in association with the lever 34 via the latch 63. More specifically, when the lever 34 is pivoted in the clockwise direction in the drawings so as to protrude the movable step 4, the latch 63 is prevented from being pivoted in the counterclockwise direction because of being locked by the pawl 66. On the other hand, when the lever 34 is pivoted in the counterclockwise direction so as to accommodate the movable step 4, the latch 64 is prevented from being pivoted in the clockwise direction because of being locked by the stopper 62a of the base plate 62. Accordingly, the movable step 4 is protruded and/or accommodated in association with the pivotal movement of the lever 34, which is as same as the first embodiment, in accordance with the rotation of the plate cam 32. On the other hand, the movable step 4 is secured in accordance with the stop of the pivotal movement of the lever 34. Then, the normal operation is performed in the same manner as the first embodiment (see Fig. 8).

Additionally, when the lever 34 is pivoted about the pin 35 as a center, thereby movable step 4 is protruded and/or accommodated by the moving amount of the other end of the lever 34 (i.e., the moving amount of the bush 61) in the longitudinal direction of the rail member 20. At this time, the bush 61 of the lever 34 is connected to the latch 63 so that the moving amount of the lever 34 in the lateral direction of the rail member 20 is absorbed. In other words, the longitudinal direction of the grooved portion 63a of the latch 63 corresponds to the lateral direction of the rail member 20, and the lever 34 allows the bush 61 to move by moving the bush 61 in the grooved portion 63a in the lateral direction of the rail member 20 in accordance with the pivotal movement of the lever 34.

Herein, the immovable failure, where the step moving mechanism 40 hardly moves or is not allowed to move because of being fixed or for example being frozen due to the congelation, is assigned to have occurred. At this time, when the operator (for example, the passenger of the vehicle) puts his/her fingers, for example, underneath the movable step 4 and applies the manual operational force in a manner where the operation lever 69 is pulled, the engagement between the bush 61 and the grooved portion 63a of the latch 63 is released at the condition described above, and the connection between the step moving mechanism 40 and the movable step 4 is released. Thereby, even in a case where the immovable failure has occurred to the step moving mechanism 40, the movable step 4 being in the protruded state can be accommodated with the manual operational force. The latch 63, the spring 65, the pawl 66, the spring 68, and so on, structure the releasing mechanism 70 serving as a releasing portion.

In addition, for example, when the movable step 4 being in the accommodated state is protruded again with the manual operation, the latch 63 is returned to the predetermined pivotal position in the manner as described above. Then, the step moving mechanism 40 and the movable step 4 are connected again with each other so as to move in association with each other.

As described above, according to the third embodiment, following effects, which will be described hereinafter, will be obtained in addition to the second to fourth effects in the first embodiment described above. First, according to the third embodiment, when the pawl 66 is pivoted against the spring 68 in accordance with applying the manual operational force to the pawl 66 via the operation lever 69, the engagement between the latch 63 and the pawl 66 is released. At this time, the latch 63 is biased by means of the spring 65 and thereby the engagement between the bush 61 and the grooved portion 63a is released, and the connection between the lever 34 (step moving mechanism 40) and the movable step 4 is released. Consequently, even in the case where the immovable failure has occurred to the step moving mechanism 40, the movable step 4 in the protruded state can be accommodated by the manual operation and the slide door 2 can be actuated to be closed without being interrupted by the movable step 4.

According to the third embodiment, second, after accommodating the movable step 4 having been in the protruded state, only by protruding the movable step 4 again for example after performing a desired operation (such as fixing of the movable step 4), the bush 61 is fitted into the grooved portion 63a of the latch 63, and a normal condition, where the torque can be transmitted to the movable step 4, can be regained.

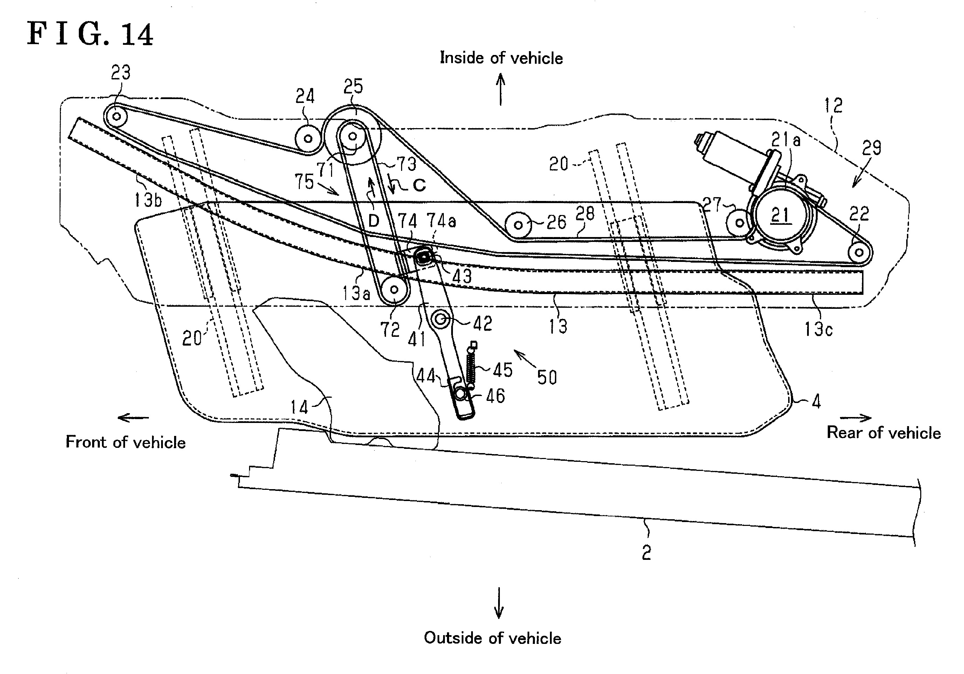

(Fourth embodiment) A fourth embodiment of the present invention will be described hereinafter mainly with reference to Fig. 14. According to the fourth embodiment, a configuration of the second transmitting device (i.e., the step moving mechanism 40) in the first embodiment is modified. However, other components are used in the same manner as the first embodiment and a detailed description will be omitted herein.

Fig. 14 is a plan view illustrating the movable step 4 in the protruded state. As is illustrated therein, a pulley 71 is rotatably supported to the support panel 12 in place of the gear 30. The pulley 71 is disposed on the upper side of the idle gear 25 so as to be coaxial therewith. Further, the torque limiter 31 (see Fig. 4) is provided between the idle gear 25 and the pulley 71 in the same manner as the first to third embodiments. Still further, a pulley 72 is rotatably supported to the support panel 12 at the outer side of the vehicle relative to the guide rail 13.

A belt 73 is arranged, or hooked, around the pulley 71 and 72. The belt 73 extends in a direction corresponding to the longitudinal direction of the rail member 20. Further, a transmitting bracket 74, which serves as the driving-side operating member and is made of a plate member, is secured to the belt 73, and an engagement groove 74a is formed at an end of the transmitting bracket 74. The engagement groove 74a serves as the driving-side engagement member and is cut in a U-shape along the longitudinal direction of the transmitting bracket 74. The engagement pin 43 protruding from the releasing lever 41 is engageable with and disengageable from the engagement groove 74a of the transmitting bracket 74 in the same manner as the first embodiment. The pulleys 71 and 72, the belt 73 and the transmitting bracket 74 structure a step moving mechanism 75 serving as the second transmitting device.

With such a structure, when the pulley 71 is rotated in the clockwise direction in Fig. 14 by the actuation of the slide door actuating unit 21, the transmitting bracket 74, which is secured to the belt 73, is transferred to a direction of an arrow C which indexes the direction of the outside of the vehicle, as shown in Fig. 14. Thereby, the movable step 4 is actuated to be protruded via the releasing lever 41 which is connected to the end of the transmitting bracket 74. On the other hand, when the pulley 71 is rotated in the counterclockwise direction in Fig. 14 by the actuation of the slide door actuating unit 21, the transmitting bracket 74 secured to the belt 73 is drawn towards a direction of an arrow D which indexes the direction of the inside of the vehicle, as shown in Fig. 14. Then, the movable step 4 is operated to be accommodated via the releasing lever 41 connected to the end of the transmitting bracket 74.

Additionally, even in a case where the immovable failure of the step moving mechanism 75 is assigned to have occurred, i.e., the step moving mechanism 75 is immovable because of being fixed (stuck) or for example being frozen due to the congelation, for example, the movable step 4 being in the protruded state can be accommodated by the manual operation in the same manner as the first embodiment (see Figs. 7A and 7B).

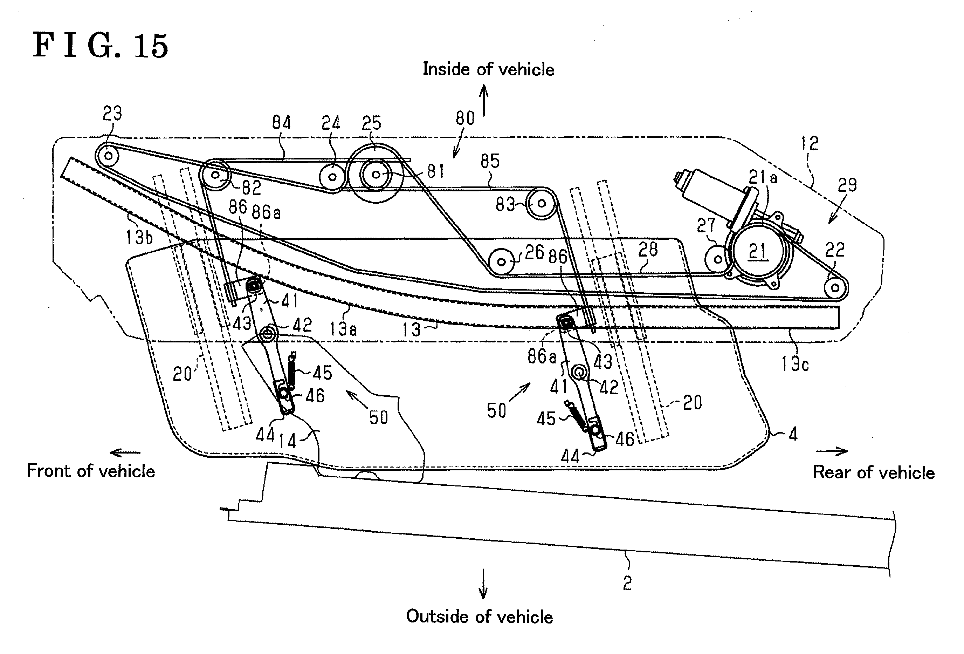

As described above, according to the fourth embodiment, same effects with the first embodiment can be obtained. (Fifth embodiment) A fifth embodiment of the present invention will be described hereinafter mainly with reference to Fig. 15. According to the fifth embodiment, a configuration of the second transmitting device (i.e., the step moving mechanism 40) in the first embodiment is modified. However, other components are used in the same manner as the first embodiment, so that a detailed description will be omitted herein.

Fig. 15 is a plan view illustrating the movable step 4 in the protruded state. As illustrated therein, a gear 81 is rotatably supported to the support panel 12 in place of the gear 30. The gear 81 is provided on the upper side of the idle gear 25 so as to be coaxial therewith. Further, the torque limiter 31 (see Fig. 4), which is as same as the first embodiment, is provided between the idle gear 25 and the gear 81. Still further, a pair of pulleys 82 and 83 is rotatably supported to the support panel 12 at a vicinity of the right and left (i.e., front side and rear side) rail members 20, respectively. The gear 81 is engaged with one end portion of a belt gear 84 at a radially peripheral portion at one side thereof (a peripheral portion in the direction of the inside of the vehicle). The other end portion of the belt gear 84 extends in the direction corresponding to the longitudinal direction of the rail member 20 in a manner where the belt gear 84 is guided by the pulley 82. In addition, the gear 81 is engaged with one end portion of a belt gear 85 at the opposite side of the radially peripheral portion (a peripheral portion in the direction of the outside of the vehicle). The other end portion of the belt gear 85 extends in the direction corresponding to the longitudinal direction of the rail member 20 in a manner where the belt gar 85 is guided by the pulley 83.

Transmitting brackets 86 are respectively secured to the end portions, which extend in the longitudinal direction of the rail member 20, of the belt gears 84 and 85. Each of the transmitting brackets 86 is made of a plate member and serves as the driving-side operating member. An end of each of the transmitting bracket 86 is formed with an engagement groove 86a, which is cut out in a U-shape along a longitudinal direction of the transmitting bracket 86 and which serves as the driving-side engagement member. According to the fifth embodiment, a pair of the releasing levers 41 and corresponding pair of surrounding components (such as the pin 42, the engagement pin 43, the operating member 44, the spring 45, the pin 46 and so on) are provided for the pair of transmitting brackets 86, which are secured to the belt gears 84 and 85, respectively. The engagement pin 43, which protrudes from each of the releasing levers 41, is allowed to be engaged with and disengaged from the engagement groove 86a, in the same manner as the first embodiment. The gear 81, the pulleys 82 and 83, the belt gears 84 and 85 and the transmitting brackets 86 structure a step moving mechanism 80 serving as the second transmitting device.

With respect to such a structure, when the gear 81 is rotated in the counterclockwise direction by the actuation of the slide door actuating unit 21, the transmitting brackets 86, which are respectively secured to the belt gear 84 and 85, are transferred towards the outside of the vehicle, and the movable step 4 is operated to be protruded via the pair of the releasing levers 41 connected to the end of the corresponding transmitting brackets 86. On the other hand, when the gear 81 is rotated in the clockwise direction by the actuation of the slide door actuating unit 21, the transmitting brackets 86 respectively connected to the belt gears 84 and 85 are drawn towards the inside of the vehicle, and the movable step 4 is operated to be accommodated via the releasing levers 41, which are respectively connected to the end of the corresponding transmitting brackets 86.

Additionally, even in a case where the immovable failure of the step moving mechanism 80 is assigned to have occurred, i.e., the step moving mechanism 80 is immovable because of being fixed or being frozen due to the congelation, for example, the movable step 4 being in the protruded state can be accommodated by the manual operation in the same manner as the first embodiment (see Figs. 7A and 7B).

As described above, according to the fifth embodiment, the same effects with the first embodiment can be obtained. Additionally, the embodiments described above can be modified as will be described hereinafter.

According to the first, fourth and fifth embodiments, the operating member 44 (the engagement recess 44a) serving as the first engagement member is provided at the end of the releasing lever 41 so as to be relatively movable in the longitudinal direction of the releasing lever 41. Further, the engagement pin 46, which serves as the second engagement member and is engageable to and disengageable from the operating member 44, is secured to the movable step 4. Alternatively, a positional relationship between these components may be inverted with one another. In other words, the engagement pin 46 may be provided at the releasing lever 41 and the operating member 44 may be secured to the movable step 4.

According to the first to third embodiments, the movement of the movable step 4 from the accommodated position to the protruded position may be completed in accordance with a completion of the movement of the slide door 2 from the fully-closed position to the fully-opened position.

According to the fourth and fifth embodiments, the releasing portion, which is as same as the second and third embodiments, may be employed.
A step apparatus for a vehicle includes an electric driving source (21), a first transmitting device (29), a second transmitting device (40, 75, 80) and a releasing device (50, 60, 70). The first transmitting device (29) transmits driving force from the electric driving source to a door (2) so as to open and close the door (2). The second transmitting device (40, 75, 80) transmits the driving force from the electric driving source (21) to a step member (4) via the first transmitting device (29) so as to move the step member (4). The releasing device (50, 60, 70) releases a connection between the step member (4) and the second transmitting device (40, 75, 80).

## Claims

1. A step apparatus for a vehicle, comprising:
an electric driving source (21);
a first transmitting device (29) transmitting driving force from the electric driving source (21) to a door (2) so as to open and close the door (2);
a second transmitting device (40, 75, 80) transmitting the driving force from the electric driving source (21) to a step member (4) via the first transmitting device (29) so as to move the step member (4); and
a releasing device (50, 60, 70) releasing a connection between the step member (4) and the second transmitting device (40).

2. A step apparatus for a vehicle according to claim 1, wherein the second transmitting device (40, 75, 80) includes:
a driving-side operating member (34, 74, 86) adapted to be connected to a vehicle body (1) and having a driving-side engagement portion (34a, 74a, 86a); and the releasing device (50) includes:
a driven-side operating member (41) pivotably connected to the step member (4) and having a driven-side engagement member (43) being engageable with and disengageable from the driving-side engagement portion (34a, 74a, 86a) of the driving-side operating member (34, 74, 86);
a first engagement member (44) provided at the driven-side operating member (41) to be movable relative to the driven-side operating member (41);
a second engagement member (46) fixed to the step member (4) and being engageable with and disengageable from the first engagement member (44) when the driven-side operating member (41) is positioned at a predetermined relative engaging position between the driving-side engagement portion (34a) of the driving-side operating member (34) and the driven-side engagement portion (43) of the driven-side operating member (41); and
a biasing member (45) biasing the first engagement member (44) so that the first engagement member (44) and the second engagement member (46) are engaged with each other when the driven-side operating member (41) is positioned at the predetermined relative engaging position;
and wherein an engagement between the first engagement member (44) and the second engagement member (46) is released by moving the first engagement member (44) against the biasing member (45) when operational force is applied to the first engagement member (44) and an engagement between the driving-side engagement portion (34a) of the driving-side operating member (34) and the driven-side engagement portion (43) of the driven-side operating member (41) is released by pivotally rotating the driven-side operating member (41) together with the first engagement member (44), whereby the connection between the step member (4) with the second transmitting device (40, 75, 80) is released.

3. A step apparatus for a vehicle according to claim 1, wherein the second transmitting device (40) includes:
a driving-side operating member (34) adapted to be connected to a vehicle body (1) and having a driving-side engagement portion (34a), and the releasing device (50) includes:
a driven-side operating member (51) pivotably connected to the step member (4) and having a driven-side engagement member (43) being engageable with and disengageable from the driving-side engagement portion (34a) of the driving-side operating member (34);
a connecting member (53) provided for attaching the driven-side operating member (51) to the step member (4) and detaching the driven-side operating member (51) from the step member (4), the connecting member (53) unrotatably fixing the driven-side operating member (51) to the step member (4) when the driven-side operating member (51) is positioned at a predetermined relative engaging position between the driving-side engagement portion (34a) of the driving-side operating member (34) and the driven-side engagement portion (43) of the driven-side operating member (51); and
an opening portion (56) formed at the step member (4) for inserting a tool for removing the connecting member (53);
and wherein an engagement between the driving-side engagement portion (34a) of the driving-side operating member (34) and the driven-side engagement portion (43) of the driven-side operating member (51) is released by pivotally rotating the driven-side operating member (51) when operational force is applied to the driven-side engagement portion (43) of the driven-side operating member (51) under the connecting member (53) being removed by the tool inserted through the opening portion (56), whereby the connection between the step member (4) and the second transmitting device (40) is released.

4. A step apparatus for a vehicle according to claim 3, further comprising:
a closing member (57) closing the opening portion (56) of the releasing device and being removable from the opening portion (56) so as to attach the driven-side operating member (51) to the step member (4) and detach the driven-side operating member (51) from the step member (4) by means of the connecting member (53).

5. A step apparatus for a vehicle according to claim 1, wherein the second transmitting device (40) includes:
a driving-side operating member (34) adapted to be connected to a vehicle body (1) and having an engagement portion (61), and the releasing device (70) includes:
a latch (63) pivotably connected to the step member (4) and having a grooved portion (63a) being engageable with and disengageable from the engagement portion (61) of the driving-side operating member (34);
a first biasing member (65) biasing the latch (63) so that an engagement between the engagement portion (61) of the driving-side operating member (34) and the grooved portion (63a) of the latch (63) is released when the latch (63) is positioned at a predetermined relative engaging position between the engagement portion (61) of the driving-side operating member (34) and the grooved portion (63a) of the latch (63);
a pawl (66) pivotably connected to the step member (4) and being engageable with and disengageable from the latch (63) when the latch (63) is positioned at the predetermined relative engaging position; and
a second biasing member (68) biasing the pawl (66) to be engaged with the latch (63) when the latch (63) is positioned at the predetermined relative engaging position,
and wherein an engagement between the latch (63) and the pawl (66) is released by pivoting the pawl (66) against the second biasing member (68) when operational force is applied to the pawl (66) and an engagement between the engagement portion (61) of the driving-side operating member (34) and the grooved portion (63a) of the latch (63) is released by biasing the latch (63) by means of the first biasing member (65), whereby the connection between the second transmitting device (40) and the step member (4) is released.

6. A step apparatus for a vehicle according to claim 5, further comprising:
a restraining member (62b) restraining the latch (63) biased by the first biasing member (65) to the predetermined relative engaging position between the engagement portion (61) of the driving-side operating member (34) and the grooved portion (63a) of the latch (63), when the engagement between the latch (63) and the pawl (66) is released.
